# EUROPEAN PATENT SPECIFICATION

(11) **EP 2 460 419 B1**
(45) Date of publication and mention of the grant of the patent: **19.03.2014**
(21) Application number: 12000973.3
(22) Date of filing: 13.03.2008
(51) Int. Cl.: A23L 2/60, A23L 2/02, A23L 1/30

(54) **Beverage having natural sweeteners with one or more stevia components and source of berry**
Getränk mit natürlichen Süßungsmitteln, einem oder mehreren Stevia-Bestandteilen und Beerenextrakt
Boisson dotée d'édulcorants naturels avec un ou plusieurs composants de stevia et une source de baies

(30) Priority: 14.03.2007 US 686189
(43) Date of publication of application: 06.06.2012
(62) Divisional of application: 08732110.5
(73) Proprietor: The Concentrate Manufacturing Company of Ireland, Hamilton HM 12 (BM)
(72) Inventor: Lee, Thomas, Scarsdale NY 10583 (US)
(74) Representative: Duxbury, Stephen

(56) References cited:
- EP-A- 1 364 587
- WO-A-2007/061795
- JP-A- 2007 082 482
- US-A1- 2006 286 259
- DATABASE FSTA INTERNATIONAL FOOD INFORMATION SERVICE (IFIS), FRANkFURT-MAIN, DE; Gida 2001; 26 (3): 223-228 2001, OVA G., ZORBA M., GUR E.: "The use of synthetic sweeteners in cherry and orange fruit drinks", XP002484649,
- GRENBY T H: "INTENSE SWEETENERS FOR THE FOOD INDUSTRY: AN OVERVIEW", TRENDS IN FOOD SCIENCE AND TECHNOLOGY, ELSEVIER SCIENCE PUBLISHERS, GB, vol. 2, no. 1, 1 January 1991 (1991-01-01) , pages 2-06, XP000892985, ISSN: 0924-2244
- HEINONEN I M ET AL: "ANTIOXIDANT ACTIVITY OF BERRY PHENOLICS ON HUMAN LOW-DENSITY LIPOPROTEIN AND LIPOSOME OXIDATION", JOURNAL OF AGRICULTURAL AND FOOD CHEMISTRY, AMERICAN CHEMICAL SOCIETY, US, vol. 46, no. 46, 1 January 1998 (1998-01-01), pages 4107-4112, XP000886697, ISSN: 0021-8561, DOI: 10.1021/JF980181C

## Description

### TECHNICAL FIELD

This invention is defined by the claims and relates to beverages and other beverage products, such as beverage concentrates, etc. In particular, this invention relates to beverages and other beverage products having formulations suitable to meet market demand for alternative nutritional characteristics or flavor profiles in beverages.

### BACKGROUND

It has long been known to produce beverages of various formulations. Improved and new formulations are desirable to meet changing market demands. In particular, there is perceived (real, as lots of products in the market) market demand for beverages having alternative nutritional characteristics, including, for example, alternative calorie content. Also, there is perceived market demand for beverages having alternative flavor profiles, including good taste, mouthfeel, etc. In addition, there is consumer interest in beverages and other beverage products, such as beverage concentrates, whose formulations make greater use of natural ingredients, that is, ingredients distilled, extracted, concentrated or similarly obtained from harvested plants and other naturally occurring sources, with limited or no further processing.

The development of new beverage formulations, for example, new beverage formulations employing alternative sweeteners, flavorants, flavor enhancing agents and the like, presents challenges in addressing associated bitterness and/or other off-tastes. In addition, such challenges typically are presented in new beverage formulations developed for alternative nutritional and/or flavor profiles. Also, there is need for new beverage formulations which can satisfactorily meet the combination of objectives including nutritional characteristics, flavor, shelf life, and other objectives.

Development of new beverage formulations has faced obstacles. For example, U.S. patent No. 4,956,191 suggests that carbonated beverages which contain blends of saccharin or the Stevia extract with aspartame tend to be less organoleptically pleasing than those containing sugar.

Beverage compositions are also disclosed in US 2006/286259 and EP 1364587.

It is therefore an object of the present invention, which is defined by the claims, to provide beverages and other beverage products such as beverage concentrates, etc. It is an object of at least certain embodiments of the invention (that is, not necessarily all embodiments of the invention) to provide beverages and other beverage products having desirable taste properties. It is an object of at least certain (but not necessarily all) embodiments of the invention to provide beverages and other beverage products having improved formulations. It is an object of at least certain (but not necessarily all) embodiments of the invention to provide beverages and other beverage products having formulations incorporating non-nutritive sweeteners and being suitable to meet market demand for alternative nutritional characteristics or flavor profiles in beverages. These and other objects, features and advantages of the invention or of certain embodiments of the invention will be apparent to those skilled in the art from the following disclosure and description of exemplary embodiments.

### SUMMARY

The present invention is defined by the claims and provides a carbonated, cola flavored beverage product comprising carbonated water, a steviol glycoside, phosphoric acid, caramel coloring, cola flavoring, and a berry component, wherein the berry component is present in an amount sufficient to mask, nullify, attenuate or reduce bitter taste, bitter aftertaste or unpleasant off-note of the steviol glycoside. Also provided is a beverage concentrate comprising a steviol glycoside, caramel coloring, phosphoric acid, cola flavoring, and a berry component, wherein the berry component is present in an amount sufficient to mask, nullify, attenuate or reduce bitter taste, bitter aftertaste or unpleasant off-note of the steviol glycoside. Lastly, a beverage comprising the above concentrate and a diluent being water.

In accordance with a first aspect, beverage products as defined by the claims include at least one steviol glycoside, e.g., rebaudiosides such as Rebaudioside A, stevioside, etc., and a berry component. In certain exemplary embodiments, the berry component is whole berry, a portion of a whole berry (e.g., one or more of juice, pulp, skin, pith, seeds and stems) and a derivative of a berry (e.g., an extract or a fraction). The berry component can be, for example, berry juice, berry juice concentrate, berry juice extract, berry juice powder, freeze dried berry juice, berry fruit powder, freeze dried berry powder and/or berry seed oil, and a mixture of any of them. In certain exemplary embodiments, the steviol glycoside is selected from the group consisting of a stevioside, a steviolbioside, dulcoside A and a rebaudioside (e.g., one or more of rebaudioside A, rebaudioside B, rebaudioside C, rebaudioside D, and rebaudioside E). In certain exemplary embodiments, the beverage product is a carbonated soft drink, a non-carbonated soft drink, a fountain beverage, a frozen ready-to-drink beverage, a coffee beverage, a tea beverage, a dairy beverage, a flavored water, an enhanced water, a fruit juice, a fruit juice-flavored drink, a sports drink, or an alcoholic beverage. In certain exemplary embodiments, the berry component is one or more of Barbados cherry (acerola cherry), bearberry, blackberry, blueberry, boysenberry, cherry, choke cherry, cloudberry, cranberry, current, date, dewberry, elderberry, grape, gooseberry, huckleberry, loganberry, olallieberry, mulberry, raisin, plains berry, prairie berry, raspberry, Saskatoon berry, salmonberry, Seabuckthorn berry, sloe berry, strawberry, thimbleberry, Thornberry, wineberry, and whortleberry. In certain exemplary embodiments, the berry component is from a berry selected from the group consisting of one or more of cranberry, strawberry, blueberry, raspberry, currant, grape, gooseberry, dewberry, boysenberry, olallieberry, loganberry, cloudberry, wineberry, salmonberry, thimbleberry, bearberry, whortleberry, huckleberry and elderberry. In certain exemplary embodiments, the berry component provides one or more antioxidants, one or more preservatives, one or more stabilizers, one or more taste masking compounds or combinations thereof. These and other optional and alternative ingredients are further disclosed below.

In accordance with a first aspect, beverage products as defined by the claims include at least one steviol glycoside, e.g., rebaudiosides such as Rebaudioside A, stevioside, etc., and a berry component. In certain exemplary embodiments, the berry component is whole berry, a portion of a whole berry (e.g., one or more of juice, pulp, skin, pith, seeds and stems) and a derivative of a berry (e.g., an extract or a fraction). The berry component can be, for example, berry juice, berry juice concentrate, berry juice extract, berry juice powder, freeze dried berry juice, berry fruit powder, freeze dried berry powder and/or berry seed oil, and a mixture of any of them. In certain exemplary embodiments, the steviol glycoside is rebaudioside A. In certain exemplary embodiments, the beverage product further comprises at least one steviol glycoside selected from the group consisting of a stevioside, a steviolbioside, dulcoside A and a rebaudioside (e.g., one or more of rebaudioside B, rebaudioside C, rebaudioside D, and rebaudioside E). In certain exemplary embodiments, the beverage product is a carbonated soft drink, a non-carbonated soft drink, a fountain beverage, a frozen ready-to-drink beverage, a coffee beverage, a tea beverage, a dairy beverage, a flavored water, an enhanced water, a fruit juice, a fruit juice-flavored drink, a sports drink, or an alcoholic beverage. In certain exemplary embodiments, the berry component is one or more of Barbados cherry (acerola cherry), bearberry, blackberry, blueberry, boysenberry, cherry, choke cherry, cloudberry, cranberry, current, date, dewberry, elderberry, grape, gooseberry, huckleberry, loganberry, olallieberry, mulberry, raisin, plains berry, prairie berry, raspberry, Saskatoon berry, salmonberry, Seabuckthorn berry, sloe berry, strawberry, thimbleberry, Thornberry, wineberry, and whortleberry. In certain exemplary embodiments, the berry component is from a berry selected from the group consisting of one or more of cranberry, strawberry, blueberry, raspberry, currant, grape, gooseberry, dewberry, boysenberry, olallieberry, loganberry, cloudberry, wineberry, salmonberry, thimbleberry, bearberry, whortleberry, huckleberry and elderberry. In certain exemplary embodiments, the berry component provides one or more antioxidants, one or more preservatives, one or more stabilizers, one or more taste masking compounds or combinations thereof. These and other optional and alternative ingredients are further disclosed below.

In accordance with another aspect, beverage products as defined by the claims are provided, including at least a steviol glycoside, an artificial sweetener and a berry component, wherein the berry component is selected from those disclosed in the preceding paragraph. In certain exemplary embodiments, the steviol glycoside is selected from the group consisting of stevioside, a steviolbioside, dulcoside A and a rebaudioside (e.g., one or more of rebaudioside A, rebaudioside B, rebaudioside C, rebaudioside D, and rebaudioside E). In certain exemplary embodiments, the artificial sweetener is aspartame, neotame, alitame, sodium saccharin, calcium saccharin, acesulfame potassium, sodium cyclamate, calcium cyclamate, neohesperidin dihydrochalcone, and sucralose. In certain exemplary embodiments, the beverage product is a carbonated soft drink, a non-carbonated soft drink, a fountain beverage, a frozen ready-to-drink beverage, a coffee beverage, a tea beverage, a dairy beverage, a flavored water, an enhanced water, a fruit juice, a fruit juice-flavored drink, a sports drink, or an alcoholic beverage. In certain exemplary embodiments, the berry component is any of those disclosed in the preceding paragraph. In certain exemplary embodiments, the berry component contains one or more antioxidants, one or more preservatives, one or more stabilizers, one or more taste masking compounds or combinations thereof. These and other optional and alternative ingredients are further disclosed below.

In accordance with another aspect, beverage products as defined by the claims are provided, including at least a steviol glycoside (e.g., rebaudioside A), an artificial sweetener and a berry component, wherein the berry component is selected from those disclosed in the preceding paragraph. In certain exemplary embodiments, the beverage product further comprises at least one steviol glycoside selected from the group consisting of stevioside, a steviolbioside, dulcoside A and a rebaudioside (e.g., one or more of rebaudioside B, rebaudioside C, rebaudioside D, and rebaudioside E). In certain exemplary embodiments, the artificial sweetener is aspartame, neotame, alitame, sodium saccharin, calcium saccharin, acesulfame potassium, sodium cyclamate, calcium cyclamate, neohesperidin dihydrochalcone, and sucralose. In certain exemplary embodiments, the beverage product is a carbonated soft drink, a non-carbonated soft drink, a fountain beverage, a frozen ready-to-drink beverage, a coffee beverage, a tea beverage, a dairy beverage, a flavored water, an enhanced water, a fruit juice, a fruit juice-flavored drink, a sports drink, or an alcoholic beverage. In certain exemplary embodiments, the berry component is any of those disclosed in the preceding paragraph. In certain exemplary embodiments, the berry component contains one or more antioxidants, one or more preservatives, one or more stabilizers, one or more taste masking compounds or combinations thereof. These and other optional and alternative ingredients are further disclosed below.

In accordance with another aspect, beverage products in the form of beverage concentrates as defined by the claims are provided, including at least a steviol glycoside and a berry component. In certain exemplary embodiments these ingredients are selected from the various alternatives disclosed above.

### DETAILED DESCRIPTION OF CERTAIN EXEMPLARY EMBODIMENTS

The present invention is defined by the claims and provides a carbonates, cola flavored beverage product comprising carbonated water, a steviol glycoside, phosphoric acid, caramel coloring, cola flavoring, and a berry component, wherein the berry component is present in an amount sufficient to mask, nullify, attenuate or reduce bitter taste, bitter aftertaste or unpleasant off-note of the steviol glycoside. Also provided is a beverage concentrate comprising a steviol glycoside, caramel coloring, phosphoric acid, cola flavoring, and a berry component, wherein the berry component is present in an amount sufficient to mask, nullify, attenuate or reduce bitter taste, bitter aftertaste or unpleasant off-note of the steviol glycoside. Lastly, a beverage comprising the above concentrate and a diluent being water.

Additional (i.e., more and/or other) sweeteners may be added. Flavorings, electrolytes, vitamins, fruit juices or other fruit products, tastents, masking agents and the like, flavor enhancers, and/or carbonation typically can be added to any beverage formulation in accordance with this disclosure, to vary the taste, mouthfeel, nutritional characteristics, etc. In general, a beverage in accordance with this disclosure typically comprises at least water, sweetener, berry component and, optionally, acidulant and flavoring. Exemplary flavorings which may be suitable for at least certain formulations in accordance with this disclosure include cola flavoring, citrus flavoring, spice flavorings and others. Carbonation in the form of carbon dioxide may be added for effervescence. Preservatives can be added if desired, depending upon the other ingredients, production technique, desired shelf life, etc. Optionally, caffeine can be added. Certain exemplary embodiments of the beverages comprising at least one steviol glycoside and a berry component are cola-flavored carbonated beverages, characteristically containing carbonated water, sweetener, kola nut extract and/or other cola flavoring, caramel coloring, phosphoric acid, and optionally other ingredients. Additional and alternative suitable ingredients will be recognized by those skilled in the art given the benefit of this disclosure.

The beverage products disclosed here include beverages, i.e., ready to drink liquid formulations, beverage concentrates and the like. Beverages include, e.g., carbonated and non-carbonated soft drinks, fountain beverages, frozen ready-to-drink beverages, coffee beverages, tea beverages, dairy beverages, powdered soft drinks, as well as liquid concentrates, flavored waters, enhanced waters, fruit juice and fruit juice-flavored drinks, sport drinks, and alcoholic beverages. The terms "beverage concentrate" and "syrup" are used interchangeably throughout this disclosure. At least certain exemplary embodiments of the beverage concentrates contemplated are prepared with an initial volume of water to which the additional ingredients are added. Full strength beverage compositions can be formed from the beverage concentrate by adding further volumes of water to the concentrate such that the concentrate is diluted to a full strength beverage. Typically, for example, full strength beverages can be prepared from the concentrates by combining approximately 1 part concentrate with between approximately 3 to approximately 7 parts water. In certain exemplary embodiments the full strength beverage is prepared by combining 1 part concentrate with 5 parts water. In certain exemplary embodiments the additional water used to form the full strength beverages is carbonated water. In certain other embodiments, a full strength beverage is directly prepared without the formation of a concentrate and subsequent dilution.

Those of ordinary skill in the art will understand that, for convenience, some ingredients are described here in certain cases by reference to the original form of the ingredient in which it is used in formulating or producing the beverage product. Such original form of the ingredient may differ from the form in which the ingredient is found in the finished beverage product. Thus, for example, in certain exemplary embodiments of the beverage products according to this disclosure, a steviol glycoside and a berry component would typically be substantially homogenously dissolved and dispersed in the beverage. Likewise, other ingredients identified as a solid, concentrate (e.g., juice concentrate), etc. would typically be homogenously dispersed throughout the beverage or throughout the beverage concentrate, rather than remaining in their original form. Thus, reference to the form of an ingredient of a beverage product formulation should not be taken as a limitation on the form of the ingredient in the beverage product, but rather as a convenient means of describing the ingredient as an isolated component of the product formulation.

Water is a basic ingredient in the beverages disclosed here, typically being the vehicle or primary liquid portion in which the remaining ingredients are dissolved, emulsified, suspended or dispersed. Purified water can be used in the manufacture of certain embodiments of the beverages disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments, water is present at a level of from about 80% to about 99.9% by weight of the beverage. In at least certain exemplary embodiments the water used in beverages and concentrates disclosed here is "treated water," which refers to water that has been treated to reduce the total dissolved solids of the water prior to optional supplementation, e.g., with calcium as disclosed in U.S. Patent No. 7,052,725. Methods of producing treated water are known to those of ordinary skill in the art and include deionization, distillation, filtration and reverse osmosis ("r-o"), among others. The terms "treated water," "purified water," "demineralized water," "distilled water," and "r-o water" are understood to be generally synonymous in this discussion, referring to water from which substantially all mineral content has been removed, typically containing no more than about 500 ppm total dissolved solids, e.g., 250 ppm total dissolved solids.

Sweeteners suitable for use in various exemplary embodiments of the beverage products disclosed here, in addition to the steviol glycoside, include natural and artificial or synthetic sweeteners, including a combination of any of them. Suitable sweeteners and combinations of sweeteners are selected for the desired nutritional characteristics, taste profile for the beverage, mouthfeel and other organoleptic factors. As used herein, "taste" refers to a combination of sweetness perception, temporal effects of sweetness perception, i.e., on-set and duration, off-tastes, e.g. bitterness and metallic taste, residual perception (aftertaste) and tactile perception, e.g. body and thickness. As used herein, a "full-calorie" beverage formulation is one fully sweetened with a nutritive sweetener. The term "nutritive sweetener" refers generally to sweeteners which provide significant caloric content in typical usage amounts, e.g., more than about 5 calories per 236 mL (8 oz.) serving of beverage. As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a beverage sweetened to a level of 10 degrees Brix with sugar. Potent sweeteners include both nutritive (e.g., Lo Han Guo juice concentrate) and non-nutritive sweeteners (e.g., typically, Lo Han Guo powder), Rebaudioside A, etc. Lo Han Guo is a potent sweetener which can be provided as a natural nutritive or natural non-nutritive sweetener. For example, Lo Han Guo juice concentrate may be a nutritive sweetener, and Lo Han Guo powder may be a non-nutritive sweetener.

In addition, potent sweeteners include both natural potent sweeteners (e.g., steviol glycosides, Lo Han Guo, etc.) and artificial potent sweeteners (e.g., neotame, etc.). However, for natural beverage products disclosed here, only natural potent sweeteners are employed. Commonly accepted potency figures for certain potent sweeteners include, for example,

| | |
|---|---|
| Cyclamate | 30 times as sweet as sugar |
| Stevioside | 100-250 times as sweet as sugar |
| Mogroside V | 100-300 times as sweet as sugar |
| Rebaudioside A | 150-300 times as sweet as sugar |
| Acesulfame-K | 200 times as sweet as sugar |
| Aspartame | 200 times as sweet as sugar |
| Saccharin | 300 times as sweet as sugar |
| Neohesperidin dihydrochalcone | 300 times as sweet as sugar |
| Sucralose | 600 times as sweet as sugar |
| Neotame | 8,000 times as sweet as sugar. |

The optional additional sweeteners suitable for at least certain exemplary embodiments of the beverage products disclosed here, in addition to the steviol glycoside, include, for example, sorbitol, mannitol, xylitol, glycyrrhizin, neohesperidin dihydrochalcone, D-tagatose, erythritol, (meso-erythritol is erythritol), malitol, maltose, lactose, fructo-oligosaccharides, Lo Han Guo, acesulfame K, aspartame, sucralose, saccharin, xylose, arabinose, isomalt, lactitol, maltitol, trehalose, and ribose, and protein sweeteners such as thaumatin, monatin, monellin, brazzein, L-alanine and glycine.

As further discussed below, exemplary natural nutritive sweeteners suitable for some or all embodiments of the beverage products disclosed here include nutritive, natural crystalline or liquid sweeteners such as Lo Han Guo juice concentrate, sucrose, fructose, glucose, glucose-fructose syrup from natural sources such as apple, chicory, honey, etc., e.g., high fructose corn syrup, invert sugar, maple syrup, maple sugar, honey, brown sugar molasses, e.g., cane molasses, such as first molasses, second molasses, blackstrap molasses, and sugar beet molasses, sorghum syrup, and/or others and mixtures of any of them. Exemplary artificial sweeteners suitable for some or all embodiments of the beverage products disclosed here include saccharin, cyclamate, aspartame, other dipeptides, acesulfame potassium, and other such artificial potent sweeteners, and mixtures of any of them, as further discussed below. Exemplary natural non-nutritive potent sweeteners suitable for use as an optional additional sweetener in some or all embodiments of the beverages disclosed here, comprising at least one steviol glycoside and a berry component disclosed here include Lo Han Guo powder and related compounds, and mixtures of any of them, as further discussed below. Also, in at least certain exemplary embodiments of the beverage products disclosed here, combinations of one or more natural nutritive sweeteners and/or one or more artificial sweeteners with one or more steviol glycosides are used to provide the sweetness and other aspects of desired taste profile and nutritive characteristics. It should also be recognized that certain such sweeteners will, either in addition or instead, act as tastents, masking agents or the like in various embodiments of the beverage products disclosed here, e.g., when used in amounts below its (or their) sweetness perception threshold in the beverage in question.

The sweetener(s) used in the beverage products disclosed here are edible consumables suitable for consumption in beverages. By "edible consumables" is meant a food or beverage or an ingredient of a food or beverage for human or animal consumption. The sweetener or sweetening agent is perceived as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent may involve the interrelationship of elements.

The steviol glycoside(s) is present in at least certain exemplary embodiments in an amount of from about 0.1 % to about 20% by weight of the beverage, typically from about 6% to about 16% by weight, depending upon the desired level of sweetness for the beverage. To achieve desired beverage uniformity, texture and taste, standardized liquid sugars as are commonly employed in the beverage industry can be used with the steviol glycoside. Typically such standardized sweeteners are free of traces of non-sugar solids which could adversely affect the flavor, color or consistency of the beverage.

As used herein, "taste" refers to a combination of sweetness perception, temporal effects of sweetness perception, i.e., on-set and duration, off-tastes, e.g. bitterness and metallic taste, residual perception (aftertaste) and tactile perception, e.g. body and thickness. As used herein, a "full-calorie" beverage formulation is one fully sweetened with a nutritive sweetener. The term "nutritive sweetener" refers generally to sweeteners which provide significant caloric content in typical usage amounts, e.g., more than about 5 calories per 236 mL (8 oz.) serving of beverage. As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a beverage sweetened to a level of 10 degrees Brix with sugar. Potent sweeteners include both nutritive (e.g., Lo Han Guo juice concentrate) and non-nutritive sweeteners (e.g., typically, Lo Han Guo powder). In addition, potent sweeteners include both natural potent sweeteners (e.g., steviol glycosides, Lo Han Guo, etc.) and artificial potent sweeteners (e.g., neotame, etc.). However, for natural beverage products disclosed here, only natural potent sweeteners are employed. Commonly accepted potency figures for certain potent sweeteners include, for example,

| | |
|---|---|
| Cyclamate | 30 times as sweet as sugar |
| Stevioside | 100-250 times as sweet as sugar |
| Mogroside V | 100-300 times as sweet as sugar |
| Rebaudioside A | 150-300 times as sweet as sugar |
| Acesulfame-K | 200 times as sweet as sugar |
| Aspartame | 200 times as sweet as sugar |
| Saccharine | 300 times as sweet as sugar |
| Neohesperidin dihydrochalcone | 300 times as sweet as sugar |
| Sucralose | 600 times as sweet as sugar |
| Neotame | 8,000 times as sweet as sugar. |

As used herein, a "non-nutritive sweetener" is one which does not provide significant caloric content in typical usage amounts, i.e., is one which imparts less than 5 calories per 8 oz. serving of beverage to achieve the sweetness equivalent of 10 Brix of sugar. As used herein, "reduced calorie beverage" means a beverage having at least a 25% reduction in calories per 8 oz. serving of beverage as compared to the full calorie version, typically a previously commercialized full-calorie version. As used herein, a "low-calorie beverage" has fewer than 40 calories per 236 mL (8 oz.) serving of beverage. As used herein, "zero-calorie" or "diet" means having less than 5 calories per serving, e.g., per 236 mL (8 oz.) for beverages.

Artificial and additional natural non-nutritive potent sweeteners are suitable for use in at least certain exemplary embodiments of the beverages disclosed here comprising at least one steviol glycoside and a berry component. Such artificial potent sweeteners include peptide based sweeteners, for example, aspartame, neotame, and alitame, and non-peptide based sweeteners, for example, sodium saccharin, calcium saccharin, acesulfame potassium, sodium cyclamate, calcium cyclamate, neohesperidin dihydrochalcone, and sucralose. Alitame may be less desirable for caramel-containing beverages where it has been known to form a precipitate. Suitable additional natural non-nutritive potent sweeteners include, for example, Lo Han Guo, and related compounds. Non-nutritive, high potency sweeteners typically are employed at a level of milligrams per fluid ounce of beverage, according to their sweetening power, any applicable regulatory provisions of the country where the beverage is to be marketed, the desired level of sweetness of the beverage, etc. It will be within the ability of those skilled in the art, given the benefit of this disclosure, to select suitable additional sweeteners, if any, for use in various embodiments of the beverage products disclosed here comprising at least one steviol glycoside and a berry component.

The at least one steviol glycoside of the beverage products disclosed here may be, for example, any one or more of the stevioside, rebaudioside and related compounds suitable for sweetening. These compounds can be obtained by extraction or the like from the Stevia plant. Stevia (e.g., Stevia rebaudiana Bertoni) is a sweet-tasting plant, whose leaves contain a complex mixture of natural sweet diterpene glycosides. Steviol glycosides and rebaudiosides are components of Stevia that contribute sweetness. Typically, these compounds are found to include stevioside (4-13% dry weight), steviolbioside (trace), the rebaudiosides, including rebaudioside A (2-4%), rebaudioside B (trace), rebaudioside C (1-2%), rebaudioside D (trace), and rebaudioside E (trace), and dulcoside A (0.4-0.7%). Such compounds are referred to herein as steviol glycosides. The following constituents also have been identified in the leaves of Stevia plants: labdane, diterpene, triterpenes, sterols, flavonoids, volatile oil constituents, pigments, gums and inorganic matter.

The optional additional non-nutritive potent sweetener Lo Han Guo, which has various different spellings and pronunciations, can be obtained from fruit of the plant family Cucurbitaceae, tribe Jollifieae, subtribe Thladianthinae, genus Siraitia. Lo Han Guo often is obtained from the genus/species S. grosvenorii, S. siamensis, S. silomaradjae, S. sikkimensis, S. africana, S. borneensis, and S. taiwaniana. Suitable fruit includes that of the genus/species S. grosvenorii, which is often called Lo Han Guo fruit. Lo Han Guo contains triterpene glycosides or mogrosides, which constituents may be used as Lo Han Guo sweeteners. Lo Han Guo can be used as the juice or juice concentrate, powder, etc. In certain exemplary embodiments, Lo Han Guo juice contains at least about 0.1%, e.g., from 0.1% to about 15%, mogrosides, such as mogroside V, mogroside IV, (11-oxo-mogroside V), siamenoside and mixtures thereof. LHG can be produced, for example, as discussed in U.S. patent No. 5,411,755. Sweeteners from other fruits, vegetables or plants also may be used as natural or processed sweeteners or sweetness enhancers in at least certain exemplary embodiments of the beverage products disclosed here comprising at least one steviol glycoside and a berry component.

The berry component of the beverage products disclosed here, in at least certain exemplary embodiments can be any, one or more berries, portions thereof (e.g., juice, pulp, skin, pith, seeds, stems and the like, including any combinations thereof) and/or derivatives thereof (e.g., extracts, fractions and the like including combinations thereof). As used herein, the term "berry" is intended to refer to, but is not limited to, fleshy fruit that typically has seeds (e.g., banana, tomato, cranberry and the like), including any small, fleshy fruit popularly called a berry, especially if it is edible. The term berry also refers to aggregate fruits (i.e., not "true" berries, but fruit commonly accepted as such). Exemplary suitable berries include raspberries, blackberries, strawberries and the like. In certain exemplary embodiments, the berry components is (or is extracted or otherwise derived from) such berries as Barbados cherry (acerola cherry), bearberry, blackberry, blueberry, boysenberry, cherry, choke cherry, cloudberry, cranberry, current, date, dewberry, elderberry, grape, gooseberry, huckleberry, loganberry, olallieberry, mulberry, raisin, plains berry, prairie berry, raspberry, Saskatoon berry, salmonberry, Seabuckthorn berry, sloe berry, strawberry, thimbleberry, Thornberry, wineberry, whortleberry and the like, or any combination of them.

In certain embodiments, the one or more berries, portions thereof or derivatives thereof in beverage products disclosed here provide a functional advantage, including, but not limited to, providing antioxidant properties, aiding in preserving the beverages, increasing stability of the beverages, improving the taste profile of the beverages, or the like.

Many berries, including blueberries, strawberries, cranberries, raspberries, black currants and others described herein and known in the art, contain naturally occurring chemical constituents with antioxidant activity and may therefore be termed "antioxidant-rich berries." Antioxidants are chemicals that can inhibit oxidation reactions. In certain antioxidant-rich berries, major contributors to antioxidant activity include ascorbic acid, also known as vitamin C, and a complex group of phenolic compounds. Much of the antioxidant activity of the phenolics is attributed to a sub-group known as anthocyanins. Anthocyanins are the primary pigments of berries and are responsible for the color of berries. In fact, various anthocyanins are responsible for almost all of the red, purple and blue colors of fruits and flowers. They are known to have strong antioxidant activity (Wang et al. (1996) J. Agric. Food Chem. 44:701). Blueberries have the highest concentration of anthocyanins, followed by cranberries and strawberries. Raspberries contain the polyphenol ellagic acid (C₁₄H₆O₈). This acid is a non-flavonoid polyphenol present in the form of hydrolysable tannins, which has been found to protect chromosomes from radiation induced lipid peroxidation.

Antioxidants can be measured by various methods. Known antioxidant compounds may be quantified by standard analytical methods. For example, total phenolics can be measured by the Folin-Ciolacalteu method, using gallic acid as a standard (Velioglu et al (1998) J. Agric. Food Chem. (46):4113). Anthocyanins may be measured a spectrophotometric methods (Fuleki and Francis (1968) J. Food Science (33):73-83.). Antioxidant activity can also be measured directly by initiating a standard oxidation reaction in vitro, such as the reaction measured by the thiobarbituric acid reaction assay (TBAR) (Buerge and Aust, (1978) Meth. Enzymol. 52:302), then measuring the inhibition of oxidation conferred by the test sample. Antioxidant activity in a different system can be measured by the DPPH free radical scavenging method (Hu and Kitts (2000) J. of Agricultural and Food Chemistry 48: 1466-1472). DPPH is a stable free radical (2,2-diphenyl-1-picrylhydrazyl) that is scavenged directly by the antioxidant substrate. This method therefore measures inhibition properties at both the initiation and propagation stages of the oxidation reaction.

In certain exemplary embodiments, the one or more berries, portions thereof or derivatives thereof, of the beverage products disclosed here aid in preserving the beverage products, i.e., to act as self preservatives. In certain exemplary embodiments, one or more berries that contain a berry preservative are added to beverages comprising at least one steviol glycoside in addition to one or more non-berry preservatives described here.

In certain exemplary embodiments of the beverage products disclosed here, one or more berry components are included (alone or with one or more other berry components) that have antioxidant, antibacterial, anti-inflammatory, antiallergenic and/or analgesic activity. Certain compounds present in berries have antimicrobial properties. For example, Seabuckthorn berries have been reported to possess antibacterial, antioxidant, anti-inflammatory, antiallergenic and analgesic activities (Benavente-Garcia et al. (1997) J. Agricult. Food Chem. 45:4505). Methods for preparing the antibacterial and antioxidant fractions of Seabuckthorn berries are described in Chauhan et al., U.S. Patent No. 6,946,154. Cold pressed raspberry seed oil has been found to contain antioxidants and antimicrobial compounds. Methods of preparing raspberry seed oil derivatives derived by the reaction of dimethyl amino propyl amine and cold pressed raspberry seed oil are described in O'Lenick, Jr., U.S. Patent No. 7,078,545. Cold pressed cranberry seed oil contains antioxidants, antimicrobial compounds. Methods of preparing cold pressed cranberry seed oil and cranberry seed oil derivatives derived by the reaction of dimethicone copolyol and cold pressed cranberry seed oil are described in Klein et al., U.S. Patent No. 6,646,144.

In certain exemplary embodiments, berries, portions thereof, derivatives thereof, and/or other berry component(s), contain one or more components that act as stabilizers and, accordingly, can be added to the beverage products disclosed here, comprising at least one steviol glycoside and a berry component, alone or in combination with other stabilizers, to maintain the stability and/or the consistency of the beverages. For example, pectin is a commonly used, berry-derived stabilizing agent. Other suitable stabilizers are described further herein.

In certain exemplary embodiments, berries, portions thereof, or derivatives thereof and/or other berry components, may be used, alone or in combination with other taste masking components, in an amount sufficient to mask, nullify, attenuate or reduce the bitter taste or aftertaste or unpleasant off-note of a Stevia sweetener, e.g., stevioside or rebaudiosides.

Berries, portions thereof, derivatives thereof and/or other berry components, can be provided in a variety of forms including, but not limited to, berry juice, berry juice concentrate, berry juice extract, berry juice powder, freeze dried berry juice, berry fruit powder, freeze dried berry fruit powder, berry seed oil and the like. Methods of making these forms are well known in the art.

Berry juices may be made by a variety of methods commonly known in the art. In general, any methods that produce berry juice (such as pressing, e.g., cold pressing and/or hot pressing) may be used. The juice may be concentrated or diluted from its natural concentration. Extracts from constituents of one or more berries, i.e., seeds, pulp, skin, pith, stems and the like, may be made by methods commonly known in the art (such as pressing). For example, the seed, pulp, skin, pith or stem of a berry may be diluted in water and the extract may be made by crushing, squeezing, or vortexing. The insoluble materials of the extract may be separated from the soluble supernatant of the extract. The supernatant of the extract can be used, and/or any oily, lipidic fraction of the extract may also be used.

Dehydrated berry component is used as an ingredient in certain exemplary embodiments of the beverage products disclosed here. Commercial dehydration of fruit can be accomplished by hot air forced-convection drying in which heated dry air is passed over or through a bed of the fruit. Fruit may be freeze-dried, a process by which the water is sublimated directly from the frozen state under conditions of very low absolute pressure. Drying of fruits is described in the patent literature and attention is directed to Kraig et al., U.S. Patent No. 4,515,822, which teaches a method of coating fruit pieces with sugars and gums, then drying rapidly in air above 104°C (220°F) °F to puff and dry the fruit pieces. Koshida et al., U.S. Patent No. 4,341,803, teaches a method of producing a crisp dry fruit snack by a sequential combination of freeze drying, microwave drying and vacuum drying. Nafisi-Movaghar, U.S. Patent No. 5,000,972, teaches a method of drying fruit without sulfiting. Mazin et al., U.S. Patent No. 5,188,861, teaches a method of removing natural flavor from dry fruit pieces and introducing a new, substantially different flavor. Durance et al., U.S. Patent No. 5,962,057, teaches a method of drying mango and pineapple with fresh flavor and crunchy texture. Durance et al., U.S. Patent No. 6,312,745, teaches a method for drying antioxidant-rich berries by vacuum microwave drying to preserve their antioxidant action and their antioxidant compounds. Methods of cold pressing berry seed oil are known in the art (See, e.g., U.S. Patent Nos. 6,391,345 and 7,078,545).

Certain embodiments of the beverage products disclosed here, comprising at least one steviol glycoside and a berry component, as well as phosphoric acid contain more acids. Such acidulant can serve any of one or more functions, including, for example, lending tartness to the taste of the beverage, enhancing palatability, increasing thirst quenching effect, modifying sweetness and acting as a mild preservative. Suitable acids are known and will be apparent to those skilled in the art given the benefit of this disclosure. Exemplary acids suitable for use in some or all embodiments of the beverages comprising at least one steviol glycoside and a berry component disclosed here include phosphoric acid, citric acid, malic acid, tartaric acid, lactic acid, formic acid, ascorbic acid, gluconic acid, succinic acid, maleic acid and adipic acid and mixtures of any of them.

Typically, for example, the one or more acids of the acidulant are used in amount, collectively, of from about 0.01% to about 1.0% by weight of the beverage, e.g., from about 0.05% to about 0.5% by weight of the beverage, such as 0.1 % to 0.25% by weight of the beverage, depending upon the acidulant used, desired pH, other ingredients used, etc. The pH of at least certain exemplary embodiments of the beverages disclosed here can be a value within the range of from about 2.0 to about 5.0. The acid in certain exemplary embodiments enhances beverage flavor. Too much acid can impair the beverage flavor and result in sourness or other off-taste, while too little acid can make the beverage taste flat.

The particular acid or acids chosen and the amount used will depend, in part, on the other ingredients, the desired shelf life of the beverage product, as well as effects on the beverage pH, titratable acidity, and taste. Those skilled in the art, given the benefit of this disclosure, will recognize that when preparing beverage products containing peptide-based artificial sweeteners such as aspartame, the resulting beverage composition is best maintained below a certain pH to retain the sweetening effect of the artificial sweetener. In the formation of calcium-supplemented beverages, the presence of calcium salts increases the pH which requires additional acids to both assist the dissolution of the salt and maintain a desirable pH for stability of the artificial sweetener. The presence of the additional acid in the beverage composition, which increases the titratable acidity of the composition, will result in a more tart or sour taste to the resulting beverage. It will be within the ability of those skilled in the art, given the benefit of this disclosure, to select a suitable acid or combination of acids and the amounts of such acids for the acidulant component of any particular embodiment of the beverages comprising at least one steviol glycoside and a berry component disclosed here.

Certain exemplary embodiments of the beverage products disclosed here, comprising at least one steviol glycoside and a berry component also may contain small amounts of alkaline agents to adjust pH. Such agents include, e.g., potassium hydroxide, sodium hydroxide and potassium carbonate. For example, the alkaline agent potassium hydroxide may be used in an amount of from about 0.02 to about 0.04% by weight, with an amount of about 0.03% being typical for certain beverages. The amount will depend on the type of alkaline agents and on the degree to which the pH is to be adjusted.

The beverage products disclosed here, comprising at least one steviol glycoside and a berry component, optionally contain additional flavor composition, for example, natural and synthetic fruit flavors, botanical flavors, other flavors, and mixtures thereof. As used here, the term "fruit flavor" refers generally to those flavors derived from the edible reproductive part of a seed plant. Included are both those wherein a sweet pulp is associated with the seed, e.g., banana, tomato, cranberry and the like, and those having a small, fleshy berry. Also included within the term "fruit flavor" are synthetically prepared flavors made to simulate fruit flavors derived from natural sources. Examples of suitable fruit or berry sources include whole berries or portions thereof, berry juice, berry juice concentrates, berry purees and blends thereof, dried berry powders, dried berry juice powders, freeze dried berry juices, powders and purees and the like.

Exemplary fruit flavors include the citrus flavors, e.g., orange, mandarin orange, tangerine, tangelo, pomelo, lemon, lime and grapefruit, and such flavors as apple, grape, cherry, and pineapple flavors and the like, and mixtures thereof. In certain exemplary embodiments the beverage concentrates and beverages comprise a fruit flavor component, e.g., a juice concentrate or juice. As used here, the term "botanical flavor" refers to flavors derived from parts of a plant other than the fruit. As such, botanical flavors can include those flavors derived from essential oils and extracts of nuts, bark, roots and leaves. Also included within the term "botanical flavor" are synthetically prepared flavors made to simulate botanical flavors derived from natural sources. Examples of such flavors include cola flavors, tea flavors, and the like, and mixtures thereof. The flavor component can further comprise a blend of various of the above-mentioned flavors. In certain exemplary embodiments of the beverage concentrates and beverages a cola flavor component is used or a tea flavor component. The particular amount of the flavor component useful for imparting flavor characteristics to the beverages comprising at least one steviol glycoside and a berry component disclosed here will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

The berry component of the beverage products disclosed here can be provided in the form of berry juice. Additional juices also may be included, e.g., fruit and/or vegetable juices. Juices can be employed in the form of a concentrate, puree, single-strength juice, or other suitable forms. The term "juice" as used here includes single-strength fruit, berry, or vegetable juice, as well as extracts, concentrates, purees, milks, and other forms. Multiple different fruit, vegetable and/or berry juices can be combined, optionally along with other flavorings, to generate a beverage having the desired flavor. Examples of suitable juice sources include, but are not limited to, plum, prune, fig, pineapple, peach, banana, apple, pear, guava, apricot, coconut, olive, kiwi, quince, buckthorn, passion fruit, rowan, pomegranate, persimmon, mango, rhubarb, papaya, litchi, lemon, orange, lime, tangerine, mandarin orange, tangelo, pomelo, grapefruit, Barbados cherry (acerola cherry), bearberry, blackberry, blueberry, boysenberry, cherry, choke cherry, cloudberry, cranberry, current, date, dewberry, elderberry, grape, gooseberry, huckleberry, loganberry, olallieberry, mulberry, raisin, plains berry, prairie berry, raspberry, Saskatoon berry, salmonberry, Seabuckthorn berry, sloe berry, strawberry, thimbleberry, Thornberry, wineberry, whortleberry and the like. Numerous additional and alternative juices suitable for use in at least certain exemplary embodiments will be apparent to those skilled in the art given the benefit of this disclosure. In beverage products disclosed here employing juice, juice may be used, for example, at a level of at least about 0.2% by weight of the beverage. In certain exemplary embodiments juice is employed at a level of from about 0.2% to about 40% by weight of the beverage. Typically, juice can be used, if at all, in an amount of from about 1% to about 20% by weight.

Certain such juices which are lighter in color can be included in the formulation of certain exemplary embodiments to adjust the flavor and/or increase the juice content of the beverage without darkening the beverage color. Examples of such juices include apple, pear, pineapple, peach, lemon, lime, orange, mandarin orange, tangelo, pomelo, apricot, grapefruit, tangerine, rhubarb, cassis, quince, passion fruit, papaya, mango, guava, litchi, kiwi, mandarin, coconut, and banana. Deflavored and decolored juices can be employed if desired.

Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings can be in the form of an extract, oleoresin, juice concentrate, bottler's base, or other forms known in the art. In at least certain exemplary embodiments, such spice or other flavors complement that of a juice or juice combination.

The one or more flavorings can be used in the form of an emulsion. A flavoring emulsion can be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than about 3% of the mixture of flavorings and emulsifier. In certain exemplary embodiments the emulsifier is from about 5% to about 30% of the mixture.

Weighting agents, which can also act as clouding agents, are typically used to keep the emulsion droplets dispersed in the beverage. Examples of such weighting agents are brominated vegetable oils, rosin esters and, in particular, ester gums. Any weighting agent that is commercially available can be used in beverages comprising at least one steviol glycoside and a berry component disclosed here. Besides weighting agents, emulsifiers and emulsion stabilizers can be used to stabilize the flavor emulsion droplets. Examples of such emulsifiers and emulsion stabilizers include gums, pectins, cellulose, polysorbates, sorbitan esters and propylene glycol alginates.

As used herein, the term "taste" refers to the flavor of the beverage and includes sweetness, sourness, bitterness, saltiness and umami (e.g., savoriness or meatiness). In certain exemplary embodiments, taste refers to beverage sweetness. As used herein, the term "mouthfeel" is intended to refer to a tactile sensation a beverage gives to the mouth (i.e., due to physical and chemical interactions in the mouth). It is evaluated from initial perception on the palate through to swallowing. Mouthfeel modifiers include qualities such as creaminess, thickness, bubbly characteristics and the like.

Carbon dioxide is used to provide effervescence to certain exemplary embodiments of the beverage products disclosed here. Any of the techniques and carbonating equipment known in the art for carbonating beverages can be employed. Carbon dioxide can enhance the beverage taste and appearance and can aid in safeguarding the beverage purity by inhibiting and destroying objectionable bacteria. In certain embodiments, for example, the beverage has a CO₂ level up to about 7.0 volumes carbon dioxide. Typical embodiments may have, for example, from about 0.5 to 5.0 volumes of carbon dioxide. As used here and independent claims, one volume of carbon dioxide is defined as the amount of carbon dioxide absorbed by any given quantity of water at 60° F (16° C) temperature and atmospheric pressure. A volume of gas occupies the same space as does the water by which it is absorbed. The carbon dioxide content can be selected by those skilled in the art based on the desired level of effervescence and the impact of the carbon dioxide on the taste or mouthfeel of the beverage. The carbonation can be natural or synthetic.

Optionally, caffeine can be added to various embodiments of the beverages comprising at least one steviol glycoside and a berry component disclosed here. The amount of caffeine added is determined by the desired beverage properties, any applicable regulatory provisions of the country where the beverage is to be marketed, etc. The caffeine must be of a purity acceptable for use in foods and beverages. The caffeine can be natural (e.g., from kola, cocoa nuts, coffee and/or tea) or synthetic in origin. If caffeine is present in the formulation prior to adding additional caffeine (e.g., in coffee or tea beverages), the caffeine present in them should be factored into the percentage of caffeine in the beverage. The amount of caffeine can be from about 0.002% to about 0.05% (check %) by weight of the single strength beverage. In certain embodiments, the amount of caffeine is from about 0.005% to about 0.02%. In certain exemplary embodiments caffeine is included at a level of 0.02 percent or less by weight of the beverage. For concentrates or syrups, the caffeine level can be from about 0.006% to about 0.15%. Caffeine levels can be higher, for example, if flavored coffees which have not been decaffeinated are used since these materials contain caffeine naturally.

The beverage products disclosed here may contain additional ingredients, including, generally, any of those typically found in beverage formulations. These additional ingredients, for example, can typically be added to a stabilized beverage concentrate. Examples of such additional ingredients include, but are not limited to, caffeine, caramel and other coloring agents or dyes, antifoaming agents, gums, emulsifiers, tea solids, cloud components, and nutritional supplements.

Examples of nutritional supplement ingredients are known to those of ordinary skill in the art and include, without limitation, vitamins, minerals, herbs or botanicals, amino acids, or essential fatty acids or enzymes, proteases, tissues, organs, glands or portions thereof. Vitamins include, but are not limited to, vitamin A, vitamin D, vitamin E (tocopherol), vitamin C (ascorbic acid), vitamin B₁ (thiamine), vitamin B₂ (riboflavin), vitamin B₃ (niacin), vitamin B₅ (pantothenic acid), vitamin B₆ (pyridoxine), vitamin B₇ (biotin), vitamin B₉ (folic acid), vitamin B₁₂ (cyanocobalamin), vitamin K (naphthoquinone), vitamin D (D₁ (molecular compound of ergocalciferol with lumisterol, 1:1); D₂ (ergocalciferol or calciferol); D₃ (cholecalciferol); D₄ (dihydrotachysterol); D₅ (sitocalciferol)), and combinations thereof. Supplements are typically present in amounts generally accepted under good manufacturing practices and are typically present in amounts between about 1% to about 100% RDV, where such RDV are established. In certain embodiments, the nutritional supplement ingredient(s) may be present in an amount of from about 5% to about 20% RDV, where established.

Beverages comprising at least one steviol glycoside and a berry component disclosed here can optionally further include one or more colorants. As used herein, the "colorant" is intended to mean any compound that imparts color, which includes, but is not limited to natural pigments, synthetic pigment, color additives and mixtures thereof. Natural and artificial colors may be used. One or more FD&C dyes (e.g., yellow #5, blue #2, red # 40) and/or FD&C lakes can be used to color beverages comprising at least one steviol glycoside and a berry component disclosed here. Exemplary lake dyes which may be used in beverages comprising at least one steviol glycoside and a berry component disclosed here are the FDA-approved Lake, such as Lake red #40, yellow #6, blue #1, and the like. Additionally, a mixture of FD&C dyes or a FD&C lake dye in combination with other conventional food and food colorants may be used. Other coloring agents, for example, natural agents may be utilized. Non-limiting examples of such other coloring agents include fruit and vegetable juices and/or powders, riboflavin, carotenoids (for example, beta-carotene), tumeric, and lycopenes. The exact amount of coloring agent used will vary, depending on the agents used and the intensity desired in the finished product. Generally, if utilized, the coloring agent should be present at a level of from about 0.0001% to about 0.5%, from about 0.001 % to about 0.1%, or from about 0.004% to about 0.1%, by weight or volume of the composition.

Certain exemplary embodiments of the beverages disclosed here are natural beverages, i.e., they employ only natural ingredients. Thus, natural embodiments of the beverage products disclosed here are natural in that they do not contain anything artificial or synthetic (including any color additives regardless of source) that would not normally be expected to be in the food. As used herein, therefore, a "natural" beverage composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 CFR § 170.3(o)(24)) are considered incidental additives and may be used if removed appropriately.

Preservatives may be used in at least certain embodiments of the beverage products disclosed here comprising at least one steviol glycoside and a berry component. That is, at least certain exemplary embodiments contain an optional dissolved preservative system. Solutions with a pH below 4 and especially those below 3 typically are "microstable," i.e., they resist growth of microorganisms, and so are suitable for longer term storage prior to consumption without the need for further preservatives. However, an additional preservative system can be used if desired. If a preservative system is used, it can be added to the beverage product at any suitable time during production, e.g., in some cases prior to the addition of the sweetener. As used here, the terms "preservation system" or "preservatives" include all suitable preservatives approved for use in food and beverage compositions, including, without limitation, such known chemical preservatives as benzoates, e.g., sodium, calcium, and potassium benzoate, sorbates, e.g., (take out sodium sorbate. It is unstable and nobody uses it), calcium, and potassium sorbate, citrates, e.g., sodium citrate and potassium citrate, polyphosphates, e.g., sodium hexametaphosphate (SHMP), and mixtures thereof, and antioxidants such as ascorbic acid, EDTA, BHA, BHT, TBHQ, dehydroacetic acid, dimethyldicarbonate, ethoxyquin, heptylparaben, and combinations thereof.

Preservatives can be used in amounts not exceeding mandated maximum levels under applicable laws and regulations. The level of preservative used typically is adjusted according to the planned final product pH, as well as an evaluation of the microbiological spoilage potential of the particular beverage formulation. The maximum level employed typically is about 0.05% by weight of the beverage. It will be within the ability of those skilled in the art, given the benefit of this disclosure, to select a suitable preservative or combination of preservatives for beverages according to this disclosure.

Other methods of beverage preservation suitable for at least certain exemplary embodiments of the beverage products disclosed here include, e.g., aseptic packaging and/or heat treatment or thermal processing steps, such as hot filling and tunnel pasteurization. Such steps can be used to reduce yeast, mold and microbial growth in the beverage products. For example, U.S. Patent No. 4,830,862 to Braun et al. discloses the use of pasteurization in the production of fruit juice beverages as well as the use of suitable preservatives in carbonated beverages. U.S. Patent No. 4,925,686 to Kastin discloses a heat-pasteurized freezable fruit juice composition which contains sodium benzoate and potassium sorbate. In general, heat treatment includes hot fill methods typically using high temperatures for a short time, e.g., about 88°C (190° F) for 10 seconds, tunnel pasteurization methods typically using lower temperatures for a longer time, e.g., about 71°C (160° F) for 10-15 minutes, and retort methods typically using, e.g., about 121°C (250° F) for 3-5 minutes at elevated pressure, i.e., at pressure above 1 atmosphere.

## Claims

1. A carbonated, cola-flavored beverage product comprising:
carbonated water;
a steviol glycoside;
phosphoric acid;
caramel coloring;
cola flavoring; and
a berry component;
wherein the berry component is present in an amount sufficient to mask, nullify, attenuate or reduce bitter taste, bitter aftertaste or unpleasant off-note of the steviol glycoside.

2. The beverage product of claim 1, wherein the steviol glycoside is selected from the group comprising stevioside, steviolbioside, dulcoside A, rebaudioside A, rebaudioside B, rebaudioside C, rebaudioside D, and rebaudioside E.

3. The beverage product of claim 1 or 2, wherein the berry component is selected from the group consisting of whole berry, a portion of a whole berry, a derivative of a berry, berry juice, berry juice concentrate, berry juice extract, berry juice powder, freeze dried berry juice, berry fruit powder, freeze dried berry powder, berry seed oil and combinations thereof.

4. The beverage product of claim 3, wherein the portion of a whole berry is selected from the group consisting of juice, pulp, skin, pith, seeds, and stems.

5. The beverage product of claim 3, wherein the derivative of a berry is an extract, or a fraction thereof.

6. The beverage product of claim 1-5, wherein the beverage is selected from the groupe consisting of a carbonated soft drink, a non-carbonated soft drink, a fountain beverage, a frozen ready-to-drink beverage, a coffee beverage, a tea beverage, a dairy beverage, a flavored water, an enhanced water, a fruit juice, a fruit juice-flavored drink, a sports drink, and an alcoholic beverage.

7. The beverage product of claim 1-6, wherein the berry component is from a berry selected from the group consisting of one or more of Barbados cherry, bearberry, blackberry, blueberry, boysenberry, cherry, choke cherry, cloudberry, cranberry, current, date, dewberry, elderberry, grape, gooseberry, huckleberry, loganberry, olallieberry, mulberry, raisin, plains berry, prairie berry, raspberry, Saskatoon berry, salmonberry. Seabuckthorn berry, sloe berry, strawberry, thimbleberry, Thornberry, wineberry and whortleberry, preferably the berry component is from a berry selected from the group consisting of one or more of cranberry, strawberry, blueberry, raspberry, currant, grape, gooseberry, dewberry, boysenberry, olallieberry, loganberry, cloudberry, wineberry, salmonberry, thimbleberry, bearberry, whortlebeny, huckleberry and elderberry.

8. The beverage product of claim 1-7, wherein the berry component provides one or more antioxidants, one or more preservatives, one or more stabilizers and/or one or more taste masking compounds.

9. The beverage product of claim 1-8, further comprising an artificial sweetener selected from the group consisting of aspartame, neotame, alitame, sodium saccharin, calcium saccharin, acesulfame potassium, sodium cyclamate, calcium cyclamate, neohesperidin dihydrochalcone, and sucralose.

10. A beverage concentrate comprising:
a steviol glycoside,
caramel coloring;
phosphoric acid;
cola flavoring; and
a berry component, wherein the berry component present in an amount sufficient to mask, nullify, attenuate or reduce bitter taste, bitter aftertaste or unpleasant off-note of the steviol glycoside.

11. The beverage concentrate according to claim 10, wherein the steviol glycoside is selected from the group comprising stevioside, steviolbioside, dulcoside A, rebaudioside A, rebaudioside B, rebaudioside C, rebaudioside D, and rebaudioside E.

12. The beverage concentrate according to claims 10 or 11, wherein the berry component is selected from the group consisting of berry juice, berry juice concentrate, berry juice extract, berry juice powder, freeze dried berry juice, berry fruit powder, freeze dried berry powder, berry seed oil and combinations thereof.

13. The beverage concentrate according to claim 12, wherein the berry component provides one or more antioxidants, one or more preservatives, one or more stabilizers and/or one or more taste masking compounds.

14. The beverage concentrate according to any of the preceding claims 10-13, further comprising an artificial sweetener selected from the group consisting of aspartame, neotame, alitame, sodium saccharin, calcium saccharin, acesulfame potassium, sodium cyclamate, calcium cyclamate, neohesperidin dihydrochalcone, and sucralose.

15. A beverage comprising a concentrate according to any of the preceding claims 10-14 and a diluent being water.

## Patentansprüche

1. Kohlensäurehaltiges Getränkeprodukt mit Colageschmack, welches umfasst:
kohlensäurehaltiges Wasser;
ein Steviolglycosid;
Phosphorsäure;
Karamellfarbstoff;
Colageschmacksstoff; und
einen Beerenbestandteil;
wobei der Beerenbestandteil in einer Menge vorhanden ist, die ausreichend ist, bitteren Geschmack, bitteren Nachgeschmack oder unangenehmen Nachgeschmack des Steviolglycosids zu verbergen, aufzuheben, abzuschwächen oder zu reduzieren.

2. Getränkeprodukt gemäß Anspruch 1, wobei das Steviolglycosid aus der Gruppe, welche Steviosid, Steviolbiosid, Dulcosid A, Rebaudiosid A, Rebaudiosid B, Rebaudiosid C, Rebaudiosid D und Rebaudiosid E umfasst, ausgewählt ist.

3. Getränkeprodukt gemäß Anspruch 1 oder 2, wobei der Beerenbestandteil aus der Gruppe, welche aus ganzer Beere, einem Teil einer ganzen Beere, einem Derivat einer Beere, Beerensaft, Beerensaftkonzentrat, Beerensaftextrakt, Beerensaftpulver, gefriergetrocknetem Beerensaft, Beerenfruchtpulver, gefriergetrocknetem Beerenpulver, Beerensamenöl und Kombinationen aus diesen besteht, ausgewählt ist.

4. Getränkeprodukt gemäß Anspruch 3, wobei der Anteil einer ganzen Beere aus der Gruppe, welche aus Saft, Fruchtfleisch, Haut, Mark, Samen und Stielen besteht, ausgewählt ist.

5. Getränkeprodukt gemäß Anspruch 3, wobei das Derivat einer Beere ein Extrakt oder eine Fraktion von diesem ist.

6. Getränkeprodukt gemäß Anspruch 1 bis 5, wobei das Getränk aus der Gruppe, welche aus einem kohlensäurehaltigen Softdrink, einem nichtkohlensäurehaltigen Softdrink, einem Getränk aus dem Zapfhahn, einem gefrorenen trinkfertigen Getränk, einem Kaffeegetränk, einem Teegetränk, einem Milchgetränk, einem aromatisierten Wasser, einem angereicherten Wasser, einem Fruchtsaft, einem Getränk mit Fruchtsaftgeschmack, einem Sportgetränk, und einem alkoholischen Getränk besteht, ausgewählt ist.

7. Getränkeprodukt gemäß Anspruch 1 bis 6, wobei der Beerenbestandteil von einer Beere stammt, welche aus der Gruppe, welche aus einer oder mehreren von Barbadoskirsche, Bärentraube, Brombeere, Blaubeere, Boysenbeere, Kirsche, virginische Traubenkirsche, Moltebeere, Kranbeere, Johannisbeere, Dattel, Ackerbeere, Holunderbeere, Traube, Stachelbeere, Schwarzbeere, Loganbeere, Olalliebeere (olallieberry), Maulbeere, Rosine, Plainsbeere (plains berry), Präriebeere, Himbeere, Saskatoonbeere, Lachsbeere, Sanddornbeere, Schlehenbeere, Erdbeere, weiße Zimthimbeere, Thornbeere (Thornberry), Weinhimbeere und Heidelbeere, umfasst, ausgewählt ist, vorzugsweise ist der Beerenbestandteil von einer Beere, welche aus der Gruppe, welche eine oder mehrere von Kranbeere, Erdbeere, Blaubeere, Himbeere, Johannisbeere, Traube, Stachelbeere, Brombeere, Boysenbeere, Olalliebeere (olallieberry), Loganbeere, Moltebeere, Weinhimbeere, Lachsbeere, weiße Zimthimbeere, Bärentraube, Heidelbeere, Schwarzbeere und Holunderbeere umfasst, ausgewählt ist.

8. Getränkeprodukt gemäß Anspruch 1 bis 7, wobei der Beerenbestandteil ein oder mehrere Antioxidantien, einen oder mehrere Konservierungsstoffe, einen oder mehrere Stabilisatoren und/oder eine oder mehrere geschmacksverbergende Bestandteile bereitstellt.

9. Getränkeprodukt gemäß Anspruch 1 bis 8, welches weiterhin einen künstlichen Süßstoff umfasst, welcher ausgewählt ist aus der Gruppe, welche aus Aspartam, Neotam, Alitam, Natriumsaccharin, Kalziumsaccharin, Kaliumacesulfam, Natriumcyclamat, Kalziumcyclamat, Neohespiridindihydrochalcon und Sucralose besteht.

10. Getränkekonzentrat, welches umfasst:
ein Steviolglycosid,
Karamellfarbstoff;
Phosphorsäure;
Colageschmacksstoff; und
ein Beerenbestandteil, wobei der Beerenbestandteil in einer Menge vorhanden ist, die ausreichend ist, um bitteren Geschmack, bitteren Nachgeschmack oder unangenehmen Nachgeschmack des Steviolglycosids zu verbergen, aufzuheben, abzuschwächen oder zu reduzieren.

11. Getränkekonzentrat gemäß Anspruch 10, wobei das Steviolglycosid aus einer Gruppe, welche Steviosid, Steviolbiosid, Dulcosid A, Rebaudiosid A, Rebaudiosid B, Rebaudiosid C, Rebaudiosid D und Rebaudiosid E umfasst, ausgewählt ist.

12. Getränkekonzentrat gemäß Anspruch 10 oder 11, wobei der Beerenbestandteil aus der Gruppe, welche Beerensaft, Beerensaftkonzentrat, Beerensaftextrakt, Beerensaftpulver, gefriergetrockneten Beerensaft, Beerenfruchtpulver, gefriergetrocknetes Beerenpulver, Beerensamenöl und Kombinationen aus diesen umfasst, ausgewählt ist.

13. Getränkekonzentrat gemäß Anspruch 12, wobei der Beerenbestandteil ein oder mehrere Antioxidantien, einen oder mehrere Konservierungsstoffe, einen oder mehrere Stabilisatoren und/oder eine oder mehrere geschmacksverbergende Bestandteile liefert.

14. Getränkekonzentrat gemäß einem der vorhergehenden Ansprüche 10 bis 13, welches weiterhin einen künstlichen Süßstoff umfasst, welcher aus der Gruppe, welche aus Aspartam, Neotam, Alitam, Natriumsaccharin, Kalziumsaccharin, Kaliumacesulfam, Natriumcyclamat, Calciumcyclamat, Neohespiridindihydrochalcon und Sucralose besteht, ausgewählt ist.

15. Getränk, welches ein Konzentrat gemäß einem der vorhergehenden Ansprüche 10 bis 14 und ein Verdünnungsmittel, welches Wasser ist, umfasst.

## Revendications

1. Produit de boisson carbonatée à arôme de cola comprenant :
de l'eau carbonatée ;
un glycoside de stéviol ;
de l'acide phosphorique ;
un colorant caramel ;
un arôme de cola ; et
un composant de baies ;
le composant de baies étant présent en une quantité suffisante pour masquer, annuler, atténuer ou réduire un goût amer, un arrière-goût amer ou une note atypique déplaisante du glycoside de stéviol.

2. Produit de boisson de la revendication 1, dans lequel le glycoside de stéviol est choisi parmi le groupe comprenant le stévioside, le stéviolbioside, le duscoside A, le rébaudioside A, rébaudioside B, le rébaudioside C, le rébaudioside D et le rébaudioside E.

3. Produit de boisson de la revendication 1 ou 2, dans lequel le composant de baies est choisi parmi le groupe comprenant baies entières, une partie d'une baie entière, un dérivé d'une baie, un jus concentré de baies, un extrait de jus de baies, une poudre de jus de baies, un jus de baies lyophilisé, une poudre de fruit de baies, une poudre de baies lyophilisée, une huile de graine de baies et des combinaisons de ceux-ci.

4. Produit de boisson de la revendication 3, dans lequel la partie d'une baie entière est choisie parmi le groupe comprenant jus, pulpe, peau, moelle, graines et tiges.

5. Produit de boisson de la revendication 3, dans lequel le dérivé d'une baie est un extrait, ou une partie de celui-ci.

6. Produit de boisson de la revendication 1 à 5, la boisson étant choisie parmi le groupe comprenant une boisson non alcoolisée carbonatée, une boisson non alcoolisée non carbonatée, une boisson à distribuer, une boisson prête à boire congelée, une boisson à base de café, une boisson à base de thé, une boisson laitière, une eau aromatisée, une eau complémentée, un jus de fruit, une boisson aromatisée au jus de fruit, une boisson sportive, et une boisson alcoolisée.

7. Produit de boisson de la revendication 1 à 6, dans lequel le composant de baies est une baie choisie parmi le groupe comprenant un(e) ou plusieurs cerise(s) des Barbade, busserole(s), mûre(s), myrtille(s), mûre(s) de Boysen, cerise(s), cerise(s) de Virginie, chicouté(s), canneberge(s), cassis(s), datte(s), ronce(s) rampante, sureau(s), raisin(s), groseille(s) à maquereau, myrtille(s), mûre(s) de Logan, olallieberry, mûre(s), raisin(s), baie(s) des plaines, baie(s) des prairies, framboise(s), baie(s) de Saskatoon, ronce(s) remarquable, baie(s) de Seabuckthorn, prunelle(s), fraise(s), ronce(s) parviflore, ronce(s), mûre(s) du Japon et airelle(s), de préférence le composant de baies est d'une baie choisie parmi le groupe comprenant un(e) ou plusieurs canneberge(s), fraise(s), myrtille(s), framboise(s), groseille(s), raisin(s), groseille(s) à maquereau, ronce(s) rampante, mûre(s) de Boysen, olallieberry, mûre(s) de Logan, chicouté(s), mûre(s) du Japon, ronce(s) parviflore, ronce(s) remarquable, busserole(s), myrtille(s), airelle(s) et sureau(s).

8. Produit de boisson de la revendication 1 à 7, dans lequel le composant de baies comprend un ou plusieurs antioxydants, un ou plusieurs conservateurs, un ou plusieurs stabilisants et/ou un ou plusieurs composés masquant le goût.

9. Produit de boisson de la revendication 1 à 8, comprenant en outre un édulcorant artificiel choisi parmi le groupe comprenant l'aspartame, le néotame, l'alitame, le saccharine de sodium, le saccharine de calcium, l'acésulfame de potassium, le cyclamate de sodium, le cyclamate de calcium, la dihydrochalcone de néohespéridine et le sucralose.

10. Boisson concentrée comprenant :
un glycoside de stéviol ;
un colorant caramel ;
de l'acide phosphorique ;
un arôme de cola ; et
un composant de baies, le composant de baies étant présent en une quantité suffisante pour masquer, annuler, atténuer ou réduire un goût amer, un arrière-goût amer ou une note atypique déplaisante du glycoside de stéviol.

11. Boisson concentrée selon la revendication 10, dans laquelle le glycoside de stéviol est choisi parmi le groupe comprenant le stévioside, le stéviolbioside, le duscoside A, le rébaudioside A, le rébaudioside B, le rébaudioside C, le rébaudioside D, et le rébaudioside E.

12. Boisson concentrée selon les revendications 10 ou 11, dans laquelle le composant de baies est choisi parmi le groupe comprenant jus de baies, concentré de jus de baies, extrait de jus de baies, poudre de jus de baies, jus de baies lyophilisé, poudre de fruit de baies, poudre de baies lyophilisée, huile de graine de baies et des combinaisons de ceux-ci.

13. Boisson concentrée selon la revendication 12, dans laquelle le composant de baies fournit un ou plusieurs antioxydants, un ou plusieurs conservateurs, un ou plusieurs stabilisants et/ou un ou plusieurs composés masquant le goût.

14. Boisson concentrée selon l'une quelconque des revendications précédentes 10 à 13, comprenant en outre un édulcorant artificiel choisi parmi le groupe comprenant l'aspartame, le néotame, l'alitame, le saccharine de sodium, le saccharine de calcium, l'acésulfame de potassium, le cyclamate de sodium, le cyclamate de calcium, la dihydrochalcone de néohespéridine et le sucralose.

15. Boisson comprenant un concentré selon l'une quelconque des revendications précédentes 10 à 14 et un diluant étant de l'eau.
